# EUROPEAN PATENT SPECIFICATION

(11) **EP 3 750 410 B1**
(45) Date of publication and mention of the grant of the patent: **29.04.2026**
(21) Application number: 19751859.0
(22) Date of filing: 06.02.2019
(51) Int. Cl.: A23L 29/212, A23L 5/00, A23L 5/10, A23L 7/157, A23L 35/00, A23L 13/50, A23P 20/10, A23P 20/12

(54) **POTATO STARCH AND POTATO STARCH COMPOSITION**
KARTOFFELSTÄRKE UND KARTOFFELSTÄRKEZUSAMMENSETZUNG
AMIDON DE POMME DE TERRE ET COMPOSITION D'AMIDON DE POMME DE TERRE

(30) Priority: 06.02.2018 JP 2018019473
(43) Date of publication of application: 16.12.2020
(73) Proprietor: Nisshin Seifun Welna Inc., Tokyo 101-8441 (JP)
(72) Inventor: KUWAHARA, Asuka, Tokyo 103-8544 (JP); ETO, Kyoko, Tokyo 103-8544 (JP); SAKAKIBARA, Michihiro, Saitama 356-8511 (JP)
(74) Representative: Wächtershäuser & Hartz Patentanwaltspartnerschaft mbB
(86) International application number: PCT/JP2019/004136
(87) International publication number: WO 2019/156099

(56) References cited:
- WO-A1-2017/026004
- CA-A1- 2 995 045
- JP-A- 2006 345 747
- JP-A- 2006 345 747
- JP-A- H0 597 901
- JP-A- H0 597 901
- STASIAK MATEUSZ ET AL: "Mechanical properties of potato starch modified by moisture content and addition of lubricant", vol. 28, no. 4, 1 October 2014 (2014-10-01), pages 501 - 509, XP055846279, Retrieved from the Internet <URL:https://agro.icm.edu.pl/agro/element/bwmeta1.element.agro-2b61d1e9-363b-4345-81e0-27fb23743acc> DOI: 10.2478/intag-2014-0040
- M. STASIAK ET AL: "Mechanical properties of native maize, wheat, and potato starches", CZECH JOURNAL OF FOOD SCIENCE, vol. 31, no. No. 4, 19 July 2013 (2013-07-19), CZ, pages 347 - 354, XP055511114, ISSN: 1212-1800, DOI: 10.17221/348/2012-CJFS

## Description

### Technical Field

The present invention relates to potato starch and a potato starch composition that can be used as a thickening material for foods or a batter material for deep-fried foods.

### Background Art

In cooking and food manufacturing, potato starch is widely used for thickening liquid food products such as soup or sauce, used as a batter material for deep-fried foods such as *karaage* (Japanese fried chicken), or used for increasing viscosity of noodles or fish-paste products. However, potato starch is difficult to handle because potato starch can be easily scattered around the surroundings and particles of potato starch can easily aggregate together. For example, when potato starch is directly added to warmed food products, powder of the potato starch cannot be dispersed uniformly in the food products but aggregate to form a so-called lump. Thus, conventionally, when potato starch is used as a thickening material for liquid food products, potato starch is dispersed in a small amount of water (i.e., "mixed with water") in advance, and the dispersion is added to the liquid food products, which consumes much time and effort.

Patent Literature 1 discloses that potato starch granules, which are produced from potato starch by dewatering, granulation, size selection, drying, and sifting, are readily dissolved in water and do not form lumps, and thus can be directly added to foods for thickening the foods. Patent Literature 1 also discloses that when the potato starch granules include a higher amount of 35 to 60 mesh granules, superior effects can be expected. Patent Literature 2 discloses that when boiled water is added to a mixture containing granulated pregelatinized starch and powdered pregelatinized starch in a predetermined ratio, smooth pasty sauce in which lumps are not easily formed can be obtained.

On the other hand, when potato starch is used as a batter material for deep-fried foods, because of scattering property and aggregability thereof it is difficult to coat food ingredients with potato starch without unevenness. Thus, when potato starch is used, the resulting deep-fried foods often have uneven color and unfavorable appearances. In addition, particles of potato starch are often scattered in a kitchen while flouring food ingredients, and thus the kitchen may become dirty and the potato starch may be wasted. Further, *karaage* obtained by dredging food ingredients with potato starch preferably have an appearance as if whitish powder is blown on the surface (so-called "looks like powder-blowing"). However, it is not necessarily easy to obtain *karaage* having such an attractive appearance and looking like powder-blowing using conventional potato starch.

Patent Literature 3 discloses that when flour for Chinese deep-fried foods containing, as a main component, potato starch in which 95% by weight or more of the potato starch has a particle size of 20 µm or more is used, *karaage* having crispiness and melting texture in the mouse can be obtained. Patent Literature 4 discloses that when batter flour or batter liquid containing grain flour or starch which are ground and have an average particle size of 20 µm or less is used, foods cooked in oil which have crispy fried batter and contain a juicy food ingredient can be obtained. Patent Literature 5 discloses that when a batter material containing potato starch with a substantial particle size of 50 µm or less is used, deep-fried foods with transparent fried batter can be obtained. Patent Literature 6 further discloses that potato starch subjected to acid treatment using a mineral acid is low in moisture absorbency and suitable for a base material for powderization of seasonings. However, any of the literature paid no attention to handling of a batter material or powder-blowing of *karaage.*

STASIAK MATEUSZ ET AL: INTERNATIONAL AGROPHYSICS, vol. 28, no. 4, October 2014, pages 501-509, DOI: 10.2478/ intag-2014-0040, discloses a study of mechanical properties of potato starch modified by moisture content and addition of lubricant.

M. STASIAK ET AL: CZECH JOURNAL OF FOOD SCIENCE, vol. 31, no. No. 4, 19 July 2013, pages 347-354, DOI: 10.17221/348/2012-CJFS, CZ ISSN: 1212-1800, discloses a study of mechanical properties of native maize, wheat, and potato starches.

CA 2 995 045 A1 discloses wheat flour that can be shaken out from a shaker-type container and a packaged wheat flour packed in a shaker-type container having one or more shaker holes with a maximum width of 2 to 20 mm, the wheat flour having an angle of difference of 13.5 to 30 degrees.

### Citation List

### Patent Literature

Patent Literature 1: JP H05-97901 A
Patent Literature 2: JP 2014-57530 A
Patent Literature 3: JP 2000-350561 A
Patent Literature 4: JP 2003-265130 A
Patent Literature 5: JP 2004-329093 A
Patent Literature 6: JP 2011-223897 A

### Summary of Invention

### Technical Problem

The present invention provides potato starch and a potato starch composition which are suitable as a thickening material for a food product and a batter material for deep-fried foods. More specifically, the present invention provides potato starch and a potato starch composition which, in case of as a thickening material, can be directly added to a liquid food product without premixing with water to thicken the food product without forming a lump, and, in case of using as a batter material, can produce *karaage* with a good appearance, that clearly looks like powder-blowing and has well-balanced color of fried food between the powder-blowing parts and surroundings thereof.

### Solution to Problem

The present inventors have found that when the angle of difference of potato starch is controlled within a specific range, potato starch which has the above-described properties and can be suitably used as a thickening material or a batter material for deep-fried foods can be obtained. The present inventors further have found that such potato starch is suitably used by shaking out of a shaker-type container, and that when the potato starch is used by shaking out from a shaker-type container, operation of cooking using the potato starch becomes easier.

Thus, the present invention provides potato starch having an angle of difference being from 8 to 35 degrees and a mean volumetric diameter of 43 to 300 µm, wherein the potato starch comprises granulated potato starch.

The present invention further provides a potato starch composition comprising the potato starch of the present invention in an amount of 50% by mass or more and having an angle of difference being from 8 to 35 degrees.

The present invention further provides a method for thickening a food product comprising directly adding the potato starch or the potato starch composition of the present invention to a target food product, and mixing together.

A method for manufacturing *karaage* comprising dredging and attaching the potato starch or the potato starch composition to a food ingredient is also disclosed, without forming part of the present invention.

The present invention further provides use of the potato starch or the potato starch composition of the present invention as a thickening material for a food product or a batter material for *karaage.*

### Advantageous Effects of Invention

When the potato starch and the potato starch composition of the present invention is used as a thickening material, a liquid food product can be thickened without forming a lump only by directly adding the potato starch to the food product without premixing with water. When the potato starch and the potato starch of the present invention is used as a batter material, *karaage* with a good appearance, that clearly looks like powder-blowing and that has well-balanced color of fried food between the powder-blowing parts and surroundings thereof can be manufactured. In addition, the potato starch and the potato starch composition of the present invention can be suitably used by shaking out in a small amount from a shaker-type container, and thus is advantageous in handling in cooking and economy.

### Description of Embodiments

The present invention provides potato starch having an angle of difference in the specific range. The potato starch of the present invention has an angle of difference being from 8 to 35 degrees. When the angle of difference is out of the above-described range, the attaching property between starch particles in the potato starch is changed and, as a result, the handling when using for thickening operation is lowered, or the resulting fried does not have good color when using as a batter material was decreased. More specifically, the potato starch of the present invention has an angle of difference being 8 degrees or more, preferably 10 degrees or more, more preferably 15 degrees or more, still preferably 17 degrees or more, and still preferably 18 degrees or more, and being 35 degrees or less, preferably 30 degrees or less, more preferably 28 degrees or less, and still preferably 25 degrees or less. The potato starch of the present invention can have an angle of difference in a range ranging, for example, from 8 to 30 degrees, from 8 to 28 degrees, from 8 to 25 degrees, from 10 to 35 degrees, from 10 to 30 degrees, from 10 to 28 degrees, from 10 to 25 degrees, from 15 to 35 degrees, from 15 to 30 degrees, from 15 to 28 degrees, from 15 to 25 degrees, from 17 to 35 degrees, from 17 to 30 degrees, from 17 to 28 degrees, from 17 to 25 degrees, from 18 to 35 degree, from 18 to 30 degrees, from 18 to 28 degrees, or from 18 to 25 degrees. Preferably, the potato starch of the present invention has an angle of difference being from 10 to 30 degrees, more preferably from 15 to 25 degrees, still preferably from 17 to 30 degrees, and still preferably from 18 to 25 degrees. Noted that the angle of difference of common potato starch is about 6 degrees.

The potato starch of the present invention has a mean volumetric diameter (MV) of 43 to 300 µm, preferably 45 to 250 µm, more preferably 50 to 230 µm, and still more preferably 65 to 200 µm. When the MV is within the above-described range, handling of the potato starch used in cooking is further improved. Owing to sizes and properties of starch crystals produced by potato plants, most of common potato starch has a particle size within a range of 5 to 120 µm and MV of the order of 30 to 40 µm. The potato starch of the present invention has a higher percentage of content of contains particles having a larger particle size, as compared with in an amount that is larger than the amount in general common potato starch.

The angle of difference of powder as defined herein means an angle between an angle of repose and an angle of fall. The angle of repose of powder as defined herein is a value as measured according to JIS R 9301-2-2 (Alumina powder-part part 2: Determination of physical properties-2: Angle of repose). The angle of fall is an angle of a powder deposit after fall, which is obtained when the powder deposit maintaining the angle of repose is broken by a constant impact. Even when powders have the same angle of repose, if the powders have different ease of collapse from each other, the angle of fall thereof are different from each other, and therefore the angles of difference thereof are different from each other. Specifically, the angle of repose and the angle of fall can be measured by the following method, and the angle of difference can be obtained by difference between the angle of repose and the angle of fall of the powder as measured by the following method.

### (Angle of repose)

A circular table (diameter 8 cm) is set, and then 100 g of sample powder is allowed to pass through a mesh having an opening of 1.7 mm, and is allowed to fall onto the circular table at a height of 7.5 cm above a center portion of the table surface using a funnel having an opening diameter of 5 mm under shaking with an amplitude of 1.5 mm, and the powder is deposited on the table. At this time, the powder is deposited to such an extent that the powder overflows from an edge of the table. At this time, an angle formed between a ridge line of the powder deposited on the table and the circular table surface is measured by laser light, and is taken as an angle of repose.

### (Angle of fall)

After the angle of repose is measured, an impact is applied to a tray on which the circular tale is put three times with a shocker. Then, an angle formed between a ridge line of the powder remaining on the table and the circular table surface is measured by laser light and is taken as an angle of an angle of fall.

Measurement of an angle of repose, an angle of fall, and angle of difference can be preferably performed by using Powder Tester PT-X (manufactured by Hosokawa Micron Group) according to an instruction manual.

Herein, the "particle size" and the "mean volumetric diameter" (MV) of particles are denoted by values as measured by a dry laser diffraction/scattering method. The term "volume basis" with respect to the content of particles refers to volume basis as measured by a dry laser diffraction/scattering method. The particle size, the mean volumetric diameter, and the content of designated particles on a volume basis can be measured by using a commercially available laser diffraction particle size analyzer (e.g., Microtrac MT3000II manufactured by NIKKISO CO., LTD.) according to a conventional method.

The potato starch of the present invention can be produced by alternating the surface properties to modify the potato starch so that the angle of difference falls within the above-described range. Examples of the method for alternating the surface properties of starch include mixing of an excipient with starch, and granulation of starch. The angle of difference may be adjusted by classifying the starch with altered surface properties as described above. For example, the potato starch of the present invention can be produced by granulating common potato starch to prepare starch particles with a large particle size, and classifying, if necessary, to adjust the angle of difference. Alternatively, the potato starches obtained by the above-described classification or modification may be mixed together as appropriate, or they may be further mixed with other potato starch, to prepare potato starch having the desired angle of difference. For example, the potato starch of the present invention can be produced by mixing granulated potato starch and ungranulated potato starch together.

The potato starch of the present invention contains granulated potato starch. Preferably, the potato starch of the present invention is granulated starch. Since the potato starch of the present invention contains granulated starch, dispersibility of the potato starch of the present invention in water is improved.

Classification and granulation treatments used for the manufacture of the potato starch of the present invention can be performed by publicly known methods. Examples of the method for classification include classification using a sieve, classification using an air flow classifier, and the like. Examples of the method for granulation include a method which includes admixing potato starch with water and a binder, and other ingredients if needed, and drying the mixture; and a method which includes compressing potato starch as it is together with other ingredients if needed, and thereafter crushing the compressed starch. Examples of the method for granulation include, but are not limited to, tumbling granulation, fluidized bed granulation, agitation granulation, spray dry granulation, with agitation granulation being preferred in terms of convenience. Each of the above-described methods for granulation can be performed using a commercially available granulating machine. After granulation, if necessary, a size selecting treatment or a drying treatment may be performed. Preferred examples of the method for granulation used for the manufacture of the potato starch of the present invention include methods disclosed in JP 2015-200207 A and JP 2015-200208 A.

Strains of potatoes which can be used as raw materials of the potato starch of the present invention are preferably, but not particularly limited to, strains cultivated for the manufacture of starch. Examples of the potato strain include Benimaru, Konayutaka, Konafubuki, Natsufubuki, Sakurafubuki, Astarte, Early Starch, and Eniwa. Among the above-described potato strains, any one strain or two or more strains can be used as raw materials of the potato starch of the present invention. The potato starch of the present invention may be unmodified starch, modified starch, or a combination thereof. Examples of the modified starch include pregelatinized starch, etherified starch, esterified starch, acetylated starch, crosslinked starch, and combinations thereof.

The potato starch of the present invention may be provided in a form of a potato starch composition. The potato starch composition of the present invention contains the potato starch of the present invention and other ingredients, such as starch derived from sources other than potato, grain flour, or other raw materials. Examples of the starch derived from sources other than potato include starch such as tapioca starch, corn starch, waxy corn starch, and wheat starch; and modified starch thereof, such as pregelatinized starch, etherified starch, esterified starch, acetylated starch, and crosslinked starch. Examples of the grain flour include wheat flour, barley flour, rye flour, rice flour, corn flour, sorghum powder, and bean flour. Examples of the above-described other ingredients include proteins such as vital gluten; saccharides such as dextrins, thick malt syrup, and sugar alcohols; seasoning such as salt; thickeners; emulsifiers; leavening agents; and enzymes. The potato starch composition of the present invention may contain any one of the ingredients selected from the above-described starch derived from sources other than potato, the above-described grain flour, and the above-described other ingredients alone, or may contain two or more thereof.

Types and contents of the above-described other ingredients in the potato starch composition of the present invention may be suitably defined according to use of the composition. In the potato starch composition of the present invention, the above-described other ingredients may be contained as powder other than the potato starch of the present invention, or may be granulated together with the potato starch of the present invention. The content of the above-described other ingredients in the potato starch composition of the present invention is 50% by mass or less, more preferably 40% by mass or less, still more preferably 30% by mass or less in the total amount of the composition. When the above-described potato starch composition is a batter material, preferably, 50% by mass to 100% by mass of the above-described other ingredients is the above-described grain flour or the above-described starch derived from sources other than potato. Thus, the content of the potato starch in the potato starch composition of the present invention is 50% by mass or more, more preferably 60% by mass or more, still more preferably 70% by mass or more in the total amount of the composition.

The potato starch composition of the present invention has an angle of difference being from 8 to 35 degrees. When the angle of repose is out of the above-described range, the attaching property between starch particles in the composition is changed and, as a result, the handling when using for thickening operation is lowered, or the resulting fried food does not have good color when using as a batter material was decreased. More specifically, the potato starch composition of the present invention has an angle of difference being 8 degrees or more, preferably 10 degrees or more, more preferably 15 degrees or more, still preferably 17 degrees or more, and still preferably 18 degrees or more, and being 35 degrees or less, preferably 30 degrees or less, more preferably 28 degrees or less, and still preferably 25 degrees or less. The potato starch composition of the present invention can have an angle of repose in a range ranging, for example, from 8 to 30 degrees, from 8 to 28 degrees, from 8 to 25 degrees, from 10 to 35 degrees, from 10 to 30 degrees, from 10 to 28 degrees, from 10 to 25 degrees, from 15 to 35 degrees, from 15 to 30 degrees, from 15 to 28 degrees, from 15 to 25 degrees, from 17 to 35 degrees, from 17 to 30 degrees, from 17 to 28 degrees, from 17 to 25 degrees, from 18 to 35 degrees, from 18 to 30 degree, from 18 to 28 degrees, or from 18 to 25 degrees. Preferably, the potato starch composition of the present invention has an angle of difference being from 10 to 30 degrees, more preferably from 15 to 25 degrees, still preferably from 17 to 30 degrees, and still preferably from 18 to 25 degrees. The potato starch composition of the present invention preferably has a mean volumetric diameter (MV) of 43 to 300 µm, more preferably 45 to 250 µm, still more preferably 50 to 230 µm, and still preferably 65 to 200 µm.

The potato starch of the present invention or the potato starch composition containing the potato starch of the present invention (collectively referred to as the potato starch or the composition of the present invention) can be used as starch for cooking. For example, the potato starch or the composition of the present invention can be used as a thickening material for food products for the manufacture of soup, sauce, or the like. Further, the potato starch or the composition of the present invention can be used as a batter material for grilled items such as meuniere or a batter material for deep-fried foods such as *karaage* or fry, sprinkling flour for food ingredients of deep-fried foods, or a coating material for a food material before cooking with heat. However, these examples of use are not limiting, and the potato starch or the composition of the present invention can be used for general purposes of starch for cooking. Preferably, the potato starch or the composition of the present invention can be used as a thickening material for food products, or a batter material for deep-fried foods (preferably *karaage*)*.*

When a food product is thickened using the potato starch or the composition of the present invention, the potato starch or the composition of the present invention may be directly added to a target food product to be thickened, and mixed together. The amount of the potato starch or the composition added to the target food product to be thickened is preferably about 0.5 to 10 parts by mass relative to 100 parts by mass of the target food product. For thickening, the potato starch or the composition of the present invention to be added to the target food product is not necessarily dispersed in water (mixed with water) in advance. Examples of the target food product to be thickened include, but are not limited to, liquid food products such as soup or sauce. Preferably, the target food product has been heated before the potato starch or the composition of the present invention is added. When the potato starch or the composition of the present invention is directly added to the heated food product and mixed together, the food product can be thickened without forming a lump.

When *karaage* is manufactured using the potato starch or the composition of the present invention, the potato starch or the composition of the present invention may be dredged and attached to a food ingredient directly or to a floured food ingredient, and then the food ingredient to which the potato starch or the composition of the present invention has been attached is cooked in oil. The amount of the potato starch or the composition of the present invention attached to a food ingredient is preferably about 3 to 30 parts by mass relative to 100 parts by mass of the food ingredient. The potato starch or the composition of the present invention can be used as a dredging-type batter material (flour for *karaage*)*.* When the potato starch or the composition of the present invention is used as a batter material, *karaage* with an attractive appearance, that clearly looks like powder-blowing and has well-balanced color of fried food between the powder-blowing parts and the surroundings thereof can be manufactured. Herein, "looks orlooking like powder-blowing" in *karaage* refers to a state in which whitish powder blown on the surface of *karaage* appears in some parts. Further, the *karaage* "clearly looks like powder-blowing" refers to that the boundary between the powder-blowing parts on the surface of *karaage* and parts having normal color of fried food (dark gray, golden brown, dark brown, brown, and black) is clear. The "well-balanced color of fried food between the powder-blowing parts and the surroundings thereof" refers to that the powder-blowing parts are distributed in an appropriate proportion (e.g., an area ratio of about 30 to 70%, preferably about 40 to 60%) in the fried batter surface having normal color of fried food. Such *karaage* has a more stereoscopic appearance due to the contrast between a whitish color of the of the powder-blowing parts and other parts on the surface, and therefore the appearance becomes more appetizing.

The potato starch or the composition of the present invention can be used by taking out from a container such as a packaging bag in the same way as in conventional starch. Further, when the potato starch or the composition of the present invention is packed in a shaker-type container and used by shaking out from the container, handling in cooking is further improved because a required amount can be easily taken out from the container and applied to a food product. When the potato starch or the composition of the present invention is taken out from a container, only a small amount of powder is scattered and shaker holes of the shaker-type container are not clogged. Thus, the potato starch or the composition of the present invention is suitable for use in shaking out in a small amount from a shaker-type container.

Examples of the shaker-type container packed with the potato starch or the composition of the present invention include a shaker-type container having one or more shaker holes. The shaker-type container may have any size and shape as long as the container can be held with one hand for operation of shaking out the potato starch packed therein from the container. For example, a container having a size and shape as in common seasoning containers or spice containers is preferred. More specifically, the container preferably can stand on its own and has a cylindrical, elliptic cylindrical, or prismatic columnar shape, or a combination thereof having a length or a diameter of about 20 to 100 mm, and a height of about 80 to 200 mm, and has a size capable of packing the potato starch or the composition of the present invention in an amount of about 50 to 500 g. Materials of the container are not particularly limited as long as powder can be stored, and the container is not deformed during a shaking operation. Examples of the material include plastic, metals, and paper.

Shapes of the one or more shaker holes of the shaker-type container are not particularly limited, and examples include circular, triangular, tetragonal, and polygonal. Size of each of the one or more shaker holes is, as a maximum width, preferably 2 to 20 mm, more preferably 3 to 12 mm, and still more preferably 4 to 8 mm. The number of the shaker holes is preferably 2 to 9, and more preferably 4 to 7. When the size of the shaker holes is too small or the number of the holes is small, the amount shaken out tends to be too small, or the holes tend to be clogged with powder. On the other hand, when the size of the shaker holes is too large or the number of the holes is large, a large amount of powder is shaken out by a single shaking operation. Thus, powder is sprinkled on a target material in an excessive amount, or powder is consumed in unnecessary amount, which is disadvantageous in economy. Furthermore, the powder is scattered and the surroundings tend to become dirty.

In preferred examples, the shaker-type container has 2 to 9, preferably 4 to 7 circular shaker holes with a diameter of 2 to 20 mm, more preferably 2 to 9, still more preferably 4 to 7 circular shaker holes with a diameter of 3 to 12 mm, and even more preferably 4 to 7 circular shaker holes with a diameter of 4 to 8 mm. In other preferred examples, the shaker-type container used in the present invention has 2 to 9, preferably 4 to 7 substantially tetragonal or substantially polygonal shaker holes having a diagonal length of 2 to 20 mm, more preferably 2 to 9, still more preferably 4 to 7 substantially tetragonal or substantially polygonal shaker holes having a diagonal length of 3 to 12 mm, and even more preferably 4 to 7 substantially tetragonal or substantially polygonal shaker holes having a diagonal length of 4 to 8 mm.

Further, the sprinkle container may have a spooning opening in addition to the above-described one or more shaker holes. The spooning opening can be used as an opening through which powder is taken out from the container using, for example, a measuring spoon or a teaspoon, or through which a relatively large quantity of powder is shaken out from the container. Preferably, in the shaker-type container, the spooning opening is provided at a position apart from the above-described one or more shaker holes. For example, the shaker holes can be disposed at one end on the top surface of the shaker container, and the spooning opening can be provided at a position 90 to 180° apart from the shaker holes in the top surface.

The one or more shaker holes and the spooning opening of the shaker-type container are preferably capable of being opened and closed. Preferably, the one or more shaker holes and the spooning opening have lids which are capable of opening and closing the one or more shaker holes and the spooning opening. The lid can prevent powder packed in the shaker-type container from absorbing moisture, and can protect the container from invasion of foreign matter such as insects. Types of the lid are not particularly limited, but the lid is preferably a lid which can be easily opened and closed with one hand, such as a sliding lid or a flap lid. Preferably, the lid of the shaker holes is a single lid which is capable of opening and closing a plurality of shaker holes at once. The lid of the one or more shaker holes and the lid of the spooning opening may be one shared lid or may be independent different lids. In both cases, the lid preferably has a structure which is capable of preventing the one or more shaker holes and the spooning opening from being opened simultaneously. For example, the lid of the one or more shaker holes and the lid of the spooning opening are two flap lids which are capable of being opened and closed independently. Alternatively, the lid of the one or more shaker holes and the lid of the spooning opening are one shared sliding lid which moves such that at least one of the shaker holes and the spooning opening is closed.

Preferably, when the potato starch or the composition of the present invention is shaken out from the above-described shaker-type container, by performing once a shaking operation of rotating the container 180 degrees, without swinging the container downward, so as to direct the surface having shaker holes downward, the potato starch or the composition of the present invention can be shaken out in suitable area and amount, for example, in a circular area with a diameter of about 10 cm and in an amount of about 1.5 to 4 g, for applying the potato starch or the composition of the present invention to a food product 15 cm below the shaker holes. When the potato starch or the composition of the present invention is shaken out from the container in a larger amount or a larger area, the shaking operation may be repeated, or the shaking operation may be performed more strongly.

### Examples

Examples are provided below for further specifically describing the present invention, but the present invention is not limited to the following examples. In the following examples, the angle of difference of powder are denoted by values as measured using Powder Tester PT-X (manufactured by Hosokawa Micron Group) and volumetric diameter MV of powder are denoted by values as measured by a dry laser diffraction/scattering method using Microtrac MT3000II (NIKKISO CO., LTD.).

### [Manufacturing Example]

### (Preparation of Potato Starch: Manufacturing Examples 1 to 15)

A container was charged with 1 kg of potato starch (commercially available product; angle of difference: 5.7 degrees, mean volumetric diameter (MV): 36.7 µm) as a raw material. Water was added to the potato starch using an atomizer with stirring using a handheld mixer. Thereafter the potato starch was dried using a thermostat oven to give the following granulated potato starch A to D, wherein granulated potato starch A is not according to the present invention.

| | Angle of difference (degrees) | Mean volumetric diameter (MV) |
|---|---|---|
| Granulated potato starch A: | 37 | 287 µm |
| Granulated potato starch B: | 23 | 217 µm |
| Granulated potato starch C: | 18 | 185 µm |
| Granulated potato starch D: | 8 | 113 µm |

These granulated potato starches A to D were each mixed with the raw material potato starch to afford potato starch having the angle of difference as shown in Table 1 (Manufacturing Examples 1 to 15).

### (Preparation of Potato Starch Composition: Manufacturing Examples 16 to 20)

The potato starch of Manufacturing Example 10 was mixed with wheat flour (soft wheat flour: angle of difference: 12 degrees, mean volumetric diameter (MV): 56.7 µm) to prepare potato starch compositions having the angle of difference as shown in Table 2 (Manufacturing Examples 16 to 20).

### [Test Example]

The potato starch and the potato starch compositions of Manufacturing Examples 1 to 20 were evaluated according to Test Examples 1 and 2 described below.

### (Test Example 1: Evaluation of properties of thickening food product)

A cookpot having a diameter of 15 cm was charged with 200 mL of water. The water was heated to boil using a gas stove, and left on a gentle boil over a low flame. To the cookpot, one tablespoon of the potato starch or the potato starch composition of Manufacturing Examples 1 to 20 was added such that the potato starch or the composition was evenly scattered all over the water surface, and immediately stirred for 20 revolutions at 2 revolutions per second using chopsticks for cooking. As a reference example, the same operation was performed using the raw material potato starch used in Manufacturing Examples instead. The thickened conditions of the resultant were evaluated according to the following criteria. Manufacture and evaluation of thickness were performed by a 10-person expert panel. The averages of evaluation results by the ten experts of the panel are shown in Tables 1 and 2.

### (Evaluation Criteria of Thickened Conditions)

Score of 5: A lump was not formed, and the material had a starchy sauce-like thickness. Extremely good.

Score of 4: Lumps were scarcely produced, and the material had a starchy sauce-like thickness. Good.

Score of 3: Lumps were not fully dissolved and remained, but the material had a starchy sauce-like thickness. Fairly good.

Score of 2: A lot of insoluble lumps remained, and the material had a low thickness. Somewhat bad.

Score of 1: Most of the starch added formed lumps and masses, and the resultant had almost no thickness. Bad.

### (Test Example 2: Evaluation of Properties as Batter Material for Deep-fried Foods)

Chicken legs were cut into 20-g pieces and used as a food ingredient. To the food ingredients, the potato starch or the potato starch compositions of Manufacturing Examples 1 to 20 were attached by sprinkling such that the amount attached was 15 g per 100 g of the chicken. Then, the resultant food ingredients were cooked for 3 minutes in salad oil heated to 170°C to manufacture *karaage.* As a reference example, *karaage* was manufactured using the raw material potato starch used in Manufacturing Examples instead. The appearance of the resulting *karaage* was evaluated by a 10-person expert panel according to the following evaluation criteria. The averages of evaluation results by the ten experts of the panel are shown in Tables 1 and 2.

### (Evaluation criteria of appearance of Karaage)

Score of 5: The whitish powder-blowing parts occupied 40 to 60% of the surface area, the boundary between the powder-blowing parts and the surrounding thereof is clear, and the color balance is very good. Extremely good appearance.

Score of 4: The whitish powder-blowing parts occupied 30 to 40% or more than 60 to 70% of the surface area, the boundary between the powder-blowing parts and the surroundings thereof is clear, and the color balance is good. Good appearance.

Score of 3: The whitish powder-blowing parts occupied 30 to 70% of the surface area, but the boundary between the powder-blowing parts and the surroundings thereof is not clear. Fairly good appearance.

Score of 2: The powder-blowing parts are speckled and the boundary is not clear. Somewhat bad appearance.

Score of 1: Almost no powder-blowing part is present. Bad appearance.

**[Table 1]**

| Potato starch | Manufacturing Example | | | | | | | | | | | Reference Example |
|---|---|---|---|---|---|---|---|---|---|---|---|---|
| | 1* | 2 | 3 | 4 | 5 | 6 | 7 | 8 | 9 | 10 | 11* | |
| Angle of difference (degree) | 6 | 8 | 10 | 16 | 17 | 19 | 25 | 29 | 30 | 35 | 37 | 5.7 |
| Mean volumetric diameter (µm) | 104 | 113 | 133 | 140 | 142 | 148 | 198 | 213 | 217 | 241 | 287 | 36.7 |
| Thickness | 2.1 | 3.2 | 3.8 | 4.3 | 4.5 | 4.5 | 4.3 | 4.0 | 3.9 | 3.6 | 3.1 | 1.3 |
| Appearance of *karaage* | 2.58 | 3.5 | 3.7 | 4.1 | 4.2 | 4.4 | 4.2 | 3.9 | 3.9 | 3.5 | 2.6 | 2.1 |

| | | | | | | | | | | | | |
|---|---|---|---|---|---|---|---|---|---|---|---|---|
| *Manufacturing examples 1, 11 and 12 are also Reference Examples. | | | | | | | | | | | | |

| Potato starch | Manufacturing Example | | | | |
|---|---|---|---|---|---|
| | 12_{*} | 13 | 6 | 14 | 15 |
| Angle of difference (degree) | 19 | 19 | 19 | 19 | 19 |
| Mean volumetric diameter (µm) | 40 | 44 | 148 | 225 | 248 |
| Thickness | 3.6 | 4.1 | 4.5 | 4.3 | 4.2 |
| Appearance of *karaage* | 3.6 | 4.0 | 4.4 | 4.2 | 4.1 |

**[Table 2]**

| composition (mass%) | Manufacturing Example | | | | | |
|---|---|---|---|---|---|---|
| | 10 | 16 | 17 | 18 | 19 | 20 |
| Potato starch | 100 | 80 | 70 | 60 | 50 | 40 |
| Wheat flour | 0 | 20 | 30 | 40 | 50 | 60 |
| Total | 100 | 100 | 100 | 100 | 100 | 100 |
| Angle of difference (degree) | 35 | 30 | 28 | 25 | 22 | 18 |
| Mean volumetric diameter (µm) | 241 | 218 | 205 | 191 | 172 | 145 |
| Thickness | 3.6 | 3.4 | 3.3 | 3.1 | 3.0 | 2.4 |
| Appearance of *karaage* | 3.5 | 3.3 | 3.2 | 3.0 | 2.9 | 2.3 |

### (Test Example 3: Potato Starch Packed in Shaker-type Container)

An open-top cylindrical container having a diameter of 50 mm and a height of 120 mm was charged with 100 g of the potato starch of Manufacturing Example 6. Then, the top face of the container was fitted with a circular plastic plate having a diameter of 50 mm and a thickness of 0.2 mm and having shaker holes with the number and diameter as shown in Table 3, to manufacture potato starch packed in a shaker-type container. Using the potato starch packed in a shaker type container, thickness was manufactured by a procedure as in Test Example 1. Then, handling in thickening was evaluated according to the following criteria. For the manufacture of thickness, potato starch was added to a cookpot by performing five times shaking operations (i.e., rotating the container 180 degrees so as to direct the shaker holes downward) 15 cm above the cookpot instead of adding one tablespoon of the potato starch to the cookpot. As a reference example, the same evaluation was performed using the raw material potato starch used in Manufacturing Examples instead. Manufacture and evaluation of thickness were performed by a 10-person expert panel. The averages of evaluation results by the ten experts of the panel are shown in Table 3.

### (Evaluation Criteria of Handling in Manufacture of Thickened Material)

Score of 5: Shaken powder was scattered within an area having a diameter of about 10 cm in the cookpot, and a starchy sauce-like thickened resultant including no lump was obtained. Extremely good.

Score of 4: Shaken powder was scattered within the cookpot, and an almost starchy sauce-like thickened resultant including no lump was obtained. Good.

Score of 3: Shaken powder was scattered within a somewhat narrow area, or slightly scattered outside the cookpot. The thickness of the resultant was slightly low or slightly high, or the resultant scarcely contained lumps. Fairly good.

Score of 2: Shaken powder was scattered within a narrow area, or scattered outside the cookpot. The thickness of the resultant was low or high, or the resultant contained lumps. Somewhat bad.

Score of 1: Shaken powder was concentrated within a narrow area to form large lumps, or scattered broadly outside the cookpot. The resultant had almost no thickness. Bad.

**[Table 3]**

| Potato starch | Manufacturing Example 6 | | | | | | | Reference Example | | |
|---|---|---|---|---|---|---|---|---|---|---|
| Diameter of shaker hole (mm) | 1.5 | 2 | 3 | 4 | 12 | 20 | 22 | 3 | 12 | 22 |
| Number of shaker hole (hole) | 5 | 5 | 5 | 5 | 2 | 1 | 1 | 5 | 2 | 1 |
| Thickened condition | 3.0^{*1} | 3.5 | 3.9 | 4.4 | 3.9 | 3.5 | 2.3^{*2} | -^{*3} | -^{*3} | 1.3 |

| Potato starch | Manufacturing Example 6 | | | | | | |
|---|---|---|---|---|---|---|---|
| Diameter of shaker hole (mm) | 5 | 5 | 5 | 5 | 5 | 5 | 5 |
| Number of shaker hole (hole) | 1 | 2 | 4 | 5 | 7 | 9 | 10 |
| Thickened condition | 3.7 | 3.9 | 4.1 | 4.5 | 3.9 | 3.4^{*2} | 1.8^{*2} |

| | | | | | | | |
|---|---|---|---|---|---|---|---|
| *1: Small amount axs shaken, and thickness was low. *2: Large amount was shaken, and thickness was high. *3: Almost no shaken, and not evaluated. | | | | | | | |

## Claims

1. Potato starch having an angle of difference being from 8 to 35 degrees and a mean volumetric diameter of 43 to 300 µm, wherein the potato starch comprises granulated potato starch.

2. A potato starch composition comprising the potato starch according to claim 1 in an amount of 50% by mass or more and having an angle of difference being from 8 to 35 degrees.

3. A shaker-type container packed with the potato starch according to claim 1, or with the potato starch composition according to claim 2.

4. The shaker-type container according to claim 3, wherein the shaker-type container has 2 to 9 shaker holes with a maximum width of 2 to 20 mm.

5. A method for thickening a liquid food product comprising directly adding the potato starch according to claim 1 or the potato starch composition according to claim 2 to a target food product, and mixing together.

6. The method according to claim 5, wherein the potato starch or the potato starch composition is used by shaking out from a shaker-type container.

7. The method according to claim 6, wherein the shaker-type container has 2 to 9 shaker holes with a maximum width of 2 to 20 mm.

8. Use of the potato starch according to claim 1 or the potato starch composition according to claim 2 as a thickening material for a liquid food product or a batter material for karaage.

9. The use according to claim 8, wherein the potato starch or the potato starch composition is used by shaking out from a shaker-type container.

10. The use according to claim 9, wherein the shaker-type container has 2 to 9 shaker holes with a maximum width of 2 to 20 mm.

## Patentansprüche

1. Kartoffelstärke mit einem Differenzwinkel von 8 bis 35 Grad und einem mittleren volumetrischen Durchmesser von 43 bis 300 µm, wobei die Kartoffelstärke granulierte Kartoffelstärke umfasst.

2. Eine Kartoffelstärkezusammensetzung, die die Kartoffelstärke nach Anspruch 1 in einer Menge von mindestens 50 Masseprozent enthält und einen Differenzwinkel von 8 bis 35 Grad aufweist.

3. Ein Schüttelbehälter, der mit der Kartoffelstärke nach Anspruch 1 oder mit der Kartoffelstärkezusammensetzung nach Anspruch 2 gefüllt ist.

4. Der Schüttelbehälter nach Anspruch 3, wobei der Schüttelbehälter 2 bis 9 Schüttellöcher mit einer maximalen Breite von 2 bis 20 mm aufweist.

5. Ein Verfahren zum Andicken eines flüssigen Lebensmittels, umfassend das direkte Hinzufügen der Kartoffelstärke nach Anspruch 1 oder der Kartoffelstärkezusammensetzung nach Anspruch 2 zu dem Ziellebensmittel und das anschließende Vermischen.

6. Verfahren nach Anspruch 5, wobei die Kartoffelstärke bzw. die Kartoffelstärkezusammensetzung aus einem Schüttelbehälter herausgeschüttelt wird.

7. Verfahren nach Anspruch 6, wobei der Schüttelbehälter 2 bis 9 Schüttellöcher mit einer maximalen Breite von 2 bis 20 mm aufweist.

8. Verwendung der Kartoffelstärke nach Anspruch 1 bzw. der Kartoffelstärkezusammensetzung nach Anspruch 2 als Verdickungsmittel für flüssige Lebensmittel oder als Teigzutat für Karaage.

9. Verwendung nach Anspruch 8, wobei die Kartoffelstärke bzw. die Kartoffelstärkezusammensetzung aus einem Schüttelbehälter herausgeschüttelt wird.

10. Verwendung nach Anspruch 9, wobei der Schüttelbehälter 2 bis 9 Schüttellöcher mit einer maximalen Breite von 2 bis 20 mm aufweist.

## Revendications

1. Amidon de pomme de terre présentant un angle de différence de 8 à 35 degrés et un diamètre volumétrique moyen de 43 à 300 µm, dans lequel l'amidon de pomme de terre comprend de l'amidon de pomme de terre granulé.

2. Composition d'amidon de pomme de terre comprenant l'amidon de pomme de terre selon la revendication 1 en une quantité de 50 % en masse ou plus et présentant un angle de différence de 8 à 35 degrés.

3. Récipient de type saupoudreur contenant l'amidon de pomme de terre selon la revendication 1, ou la composition d'amidon de pomme de terre selon la revendication 2.

4. Récipient de type saupoudreur selon la revendication 3, dans lequel le récipient de type saupoudreur présente 2 à 9 trous de saupoudrage d'une largeur maximale de 2 à 20 mm.

5. Procédé d'épaississement d'un produit alimentaire liquide comprenant l'ajout direct de l'amidon de pomme de terre selon la revendication 1 ou de la composition d'amidon de pomme de terre selon la revendication 2 à un produit alimentaire cible, et leur mélange.

6. Procédé selon la revendication 5, dans lequel l'amidon de pomme de terre ou la composition d'amidon de pomme de terre est utilisé(e) en étant versé(e) par secouage à partir d'un récipient de type saupoudreur.

7. Procédé selon la revendication 6, dans lequel le récipient de type saupoudreur présente 2 à 9 trous de saupoudrage d'une largeur maximale de 2 à 20 mm.

8. Utilisation de l'amidon de pomme de terre selon la revendication 1 ou de la composition d'amidon de pomme de terre selon la revendication 2 comme matière épaississante pour un produit alimentaire liquide ou comme matière de pâte à frire pour karaage.

9. Utilisation selon la revendication 8, dans laquelle l'amidon de pomme de terre ou la composition d'amidon de pomme de terre est utilisé(e) en étant versé(e) par secouage à partir d'un récipient de type saupoudreur.

10. Utilisation selon la revendication 9, dans laquelle le récipient de type saupoudreur présente 2 à 9 trous de saupoudrage d'une largeur maximale de 2 à 20 mm.
